Europäisches Patentamt

European Patent Office

Office européen des brevets

(11) Numéro de publication: **0 319 397 B1**

(12) **FASCICULE DE BREVET EUROPEEN**

(45) Date de publication de fascicule du brevet: **30.09.92**  (51) Int. Cl.⁵: **C21D 10/00**, C21D 1/09, C22F 3/00, B23K 26/18

(21) Numéro de dépôt: **88403000.8**

(22) Date de dépôt: **29.11.88**

(54) **Procédé de traitement de matériaux par chocs laser.**

(30) Priorité: **02.12.87 FR 8716717**

(43) Date de publication de la demande:
**07.06.89 Bulletin 89/23**

(45) Mention de la délivrance du brevet:
**30.09.92 Bulletin 92/40**

(84) Etats contractants désignés:
**DE FR GB IT**

(56) Documents cités:
**EP-A- 0 085 278**
**EP-A- 0 094 912**
**US-A- 3 850 698**

**METALLURGICAL TRANSACTIONS A, vol. 8A, janvier 1977, pages 119-125, Metals Park, Ohio, US; A.H. CLAUER et al.: "Pulsed laser induced deformation in an Fe-3 Wt Pct Si alloy"**

(73) Titulaire: **CENTRE NATIONAL DE LA RECHER-CHE SCIENTIFIOUE (CNRS)**
**15, Ouai Anatole France**
**F-75700 Paris Cedex 07(FR)**

(72) Inventeur: **Fabbro, Rémy**
**94/96, rue Galliéni**
**F-94230 Cachan(FR)**
Inventeur: **Fournier, Jean**
**48, rue Raynouard**
**F-75016 Paris(FR)**

(74) Mandataire: **Mongrédien, André et al**
**c/o BREVATOME 25, rue de Ponthieu**
**F-75008 Paris(FR)**

## Description

La présente invention a pour objet un procédé de traitement de matériaux par chocs laser. Elle trouve une application notamment en métallurgie, dans l'amélioration de la tenue en fatigue des métaux.

On sait qu'il est possible de traiter des matériaux en leur faisant subir un ou des chocs, lesquels sont obtenus en dirigeant, sur un échantillon du matériau à traiter, des impulsions très brèves de rayonnement laser. Un tel procédé est décrit par exemple dans le brevet des Etats-Unis d'Amérique n° 3,850,698 délivré le 26 novembre 1974 à P.J. MALLOZZI et al ou par EP-A-85278

Dans un tel procédé, on recouvre l'échantillon à traiter d'une couche mince d'un matériau opaque à la longueur d'onde du rayonnement laser employé, et on dispose un matériau (liquide ou solide) transparent devant la couche absorbante.

Le rôle du matériau transparent placé devant le revêtement absorbant est de contrarier la détente du plasma qui se forme à l'interface milieu transparent-revêtement absorbant et de prolonger la durée pendant laquelle s'exerce la pression sur l'échantillon.

La présente invention a pour objet un procédé permettant d'accroître la profondeur à laquelle les contraintes de compression sont induites. Ce résultat est obtenu par l'utilisation d'une impulsion laser dont le flux lumineux dépasse le seuil au-delà duquel tout matériau transparent devient le siège de phénomènes de claquage dus au champ électrique du rayonnement électromagnétique qui le traverse, phénomènes qui font passer le matériau à l'état opaque. Les photons sont alors absorbés à l'intérieur de ce milieu, ce qui provoque une pression qui empêche ce milieu de se mettre en mouvement sous l'effet de la pression de plasma créée à l'interface milieu transparent-couche absorbante.

La détente du plasma est ainsi retardée et la durée de maintien de la pression allongée. La profondeur de pénétration de l'onde de choc et, par suite, la profondeur à laquelle se manifeste une contrainte de compression, s'en trouvent augmentées.

De façon plus précise, la présente invention a pour objet un procédé de traitement d'un matériau par chocs laser, destiné notamment à améliorer la tenue en fatigue de ce matériau, procédé dans lequel on recouvre un échantillon dudit matériau par une première couche d'un premier matériau absorbant à la longeur d'onde du rayonnement laser utilisé, cette première couche étant elle-même recouverte par une seconde couche d'un second matériau et dans lequel on irradie l'ensemble par une impulsion de rayonnement laser ; le procédé de l'invention est caractérisé par le fait que, le second matériau admettant pour le rayonnement utilisé un seuil de flux lumineux en-dessous duquel il est transparent et au-dessus duquel il devient opaque, on irradie l'ensemble par au moins une impulsion laser ayant un flux qui est d'abord inférieur à ce seuil puis qui dépasse celui-ci.

De manière avantageuse, on irradie l'ensemble par plusieurs impulsions de rayonnement laser.

Selon une variante de mise en oeuvre, les impulsions ont des durées différentes, les unes courtes, de l'ordre de la nanoseconde, les autres plus longues, de l'ordre de la dizaine de nanosecondes.

De préférence, l'impulsion de rayonnement laser a un front de montée raide de l'ordre de la nanoseconde et une durée de l'ordre de la dizaine de nanosecondes.

Dans une variante avantageuse, préalablement audit traitement par chocs, on fait subir au matériau un traitement thermique consistant à irradier la surface nue de l'échantillon par une impulsion laser.

Ce traitement préalable, qui est en soi connu, conduit, dans le contexte de la présente invention, à un résultat paradoxal. En effet, un tel traitement est connu pour provoquer des contraintes résiduelles de traction, ce qui va à l'encontre du but visé par l'invention, qui est l'obtention de contraintes résiduelles de compression. Mais, ce traitement préalable, qui produit une hypertrempe en surface augmentant la dureté superficielle de l'échantillon, se révèle être bénéfique pour l'étape du traitement qui suit.

L'impulsion laser servant à ce traitement thermique préalable peut avoir une durée comprise entre 0,2 et 100 nanosecondes.

Le traitement thermique de la surface nue de l'échantillon peut s'effectuer soit sous vide, soit en présence d'un fluide en contact avec la surface. Ce fluide peut être un gaz ou un liquide. On peut aussi effectuer ce traitement en plongeant l'échantillon dans l'azote liquide.

La mise en oeuvre de ce traitement préalable de surface sous atmosphère contrôlée permet d'implanter en surface de l'échantillon des atomes étrangers au matériau constituant l'échantillon. Par exemple, en procédant sous azote gazeux ou dans l'azote liquide, on provoquera une nitruration du métal ; en présence d'anhydride carbonque, il se produira une cémentation, etc.

De toute façon, les caractéristiques de l'invention apparaîtront mieux après la description qui va suivre, d'exemples donnés à titre explicatif et nullement limitatif. Cette description se réfère à des dessins annexés sur lesquels :

- la figure 1 montre schématiquement une installation permettant de mettre en oeuvre le procédé de l'invention,

- les figures 2 à 6 montrent cinq diagrammes illustrant la variation d'amplitude des contraintes déposées dans cinq échantillons différents,
- la figure 7 montre une forme avantageuse d'impulsion lumineuse,
- la figure 8 donne un diagramme comparatif pour des impulsions de durée et de forme différentes, et
- la figure 9 montre la variation de l'amplitude de la contrainte en fonction de la profondeur, pour un traitement de surface.

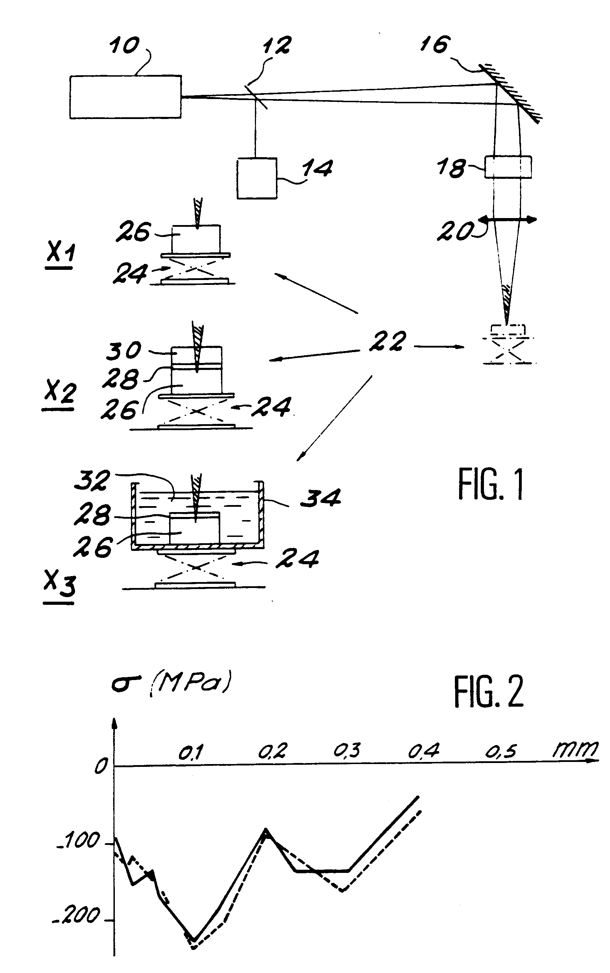

L'installation représentée sur la figure 1 comprend un laser 10 (par exemple un laser à verre dopé au néodyme fonctionnant en régime déclenché et émettant un rayonnement à 1,06 $\mu$m), une lame semi-réfléchissante 12 renvoyant une faible partie (inférieure à 1%) de la lumière incidente vers un photodétecteur 14, un miroir 16, éventuellement un convertisseur de fréquence 18 capable de doubler celle-ci ou de la quadrupler, une lentille de focalisation 20 et un poste de travail 22. Ce poste comprend un plateau 24 de hauteur variable, sur lequel est disposé un échantillon à traiter 26, exposé nu au rayonnement incident dans le cas du traitement thermique de surface préliminaire (variante X1) ou recouvert d'une couche absorbante 28 surmontée d'un revêtement transparent 30 comme du verre (variante X2) ou plongeant dans un liquide 32, lorsque l'ensemble est placé dans une cuve 34 remplie de ce même liquide (variante X3). Les deux dernières variantes correspondent à un traitement en profondeur.

Les résultats obtenus par le procédé de l'invention sont ilustrés sur les figures 2 à 6. Sur ces figures, l'axe des abscisses représente la profondeur dans l'échantillon comptée à partir de la surface supposée être placée à l'extrême gauche ; l'unité est le dixième de millimètre. L'axe des ordonnées représente la pression exercée dans le métal par les contraintes et exprimée en Mégapascal. La ligne en trait continu et la ligne en traits interrompus représentent la pression mesurée dans deux directions perpendiculaires, toutes deux parallèles à la surface de l'échantillon.

Dans tous les cas, le matériau utilisé était l'acier XC 38 recuit et le rayonnement laser utilisé se situait à 1,06 $\mu$m. Les mesures de pression ont été effectuées par rayons X.

Ces différents diagrammes correspondent à différentes conditions opératoires et notamment à différents flux d'intensité lumineuse.

Le diagramme de la figure 2 correspond à une seule impulsion laser, de durée 2,75 ns et de flux 24 GW/cm$^2$. Le milieu transparent était constitué par une lame de verre d'épaisseur 6 mm ; la couche absorbante était une couche de peinture.

Le seuil critique pour le verre était d'environ 25 GW/cm$^2$ (seuil qui se détermine aisément par observation visuelle d'une lame soumise à des tirs de puissance croissante) pour une durée de 2,75 ns.

Cette expérience correspondait donc à un flux lumineux inférieur au seuil et par conséquent permet d'illustrer les résultats obtenus avec les techniques antérieures (telles que celle du brevet américain cité plus haut).

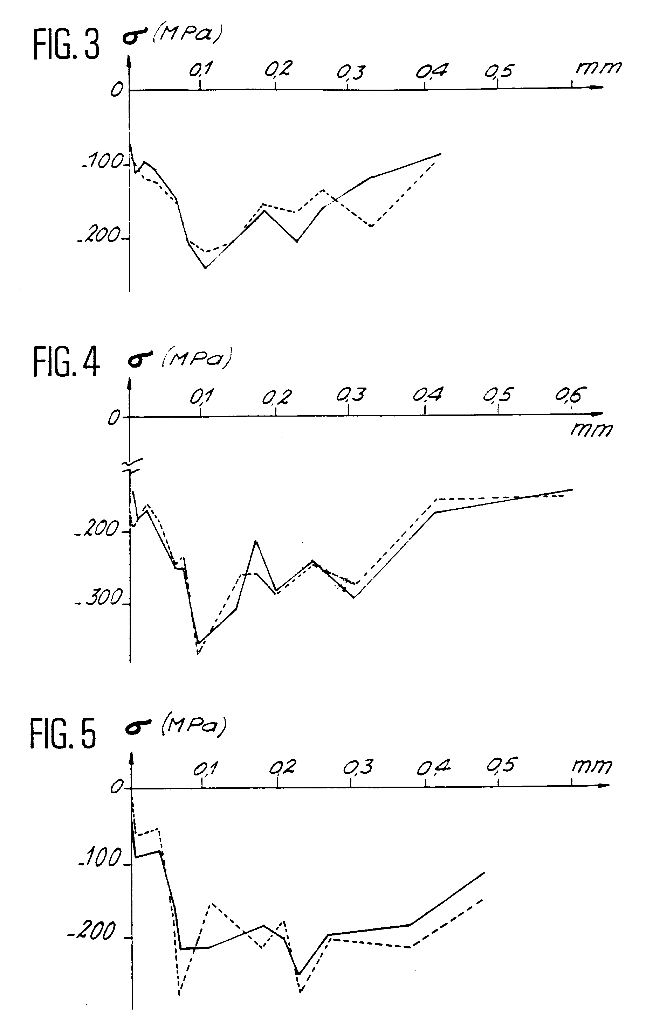

La figure 3 correspond, elle, à des conditions expérimentales conformes à l'invention, avec un flux de 62 GW/cm$^2$, c'est-à-dire au-delà du seuil critique. On voit que la compression est présente au-delà de la limite observée sur la figure 2 : par exemple à 0,4 mm de la surface, la pression est de 100 MPa alors que, dans le cas de la figure 2, elle n'était que de 50 MPa.

La figure 4 correspond à un essai à 3 tirs successifs à 2,75 ns et à 65 GW/cm$^2$ (donc toujours au-dessus du seuil). Le matériau transparent était une couche d'eau distillée d'épaisseur 2 mm. On notera l'augmentation de profondeur, due à la répétition des tirs.

La figure 5 correspond à un tir à 25 ns, 13 GW/cm$^2$ (donc au-dessus du seuil, qui se situe pour une durée de 25 ns, à 2,5 GW/cm$^2$). L'échantillon était recouvert de peinture et de 2 mm d'eau distillée. On notera que l'allongement de la durée de l'impulsion augmente la profondeur du traitement.

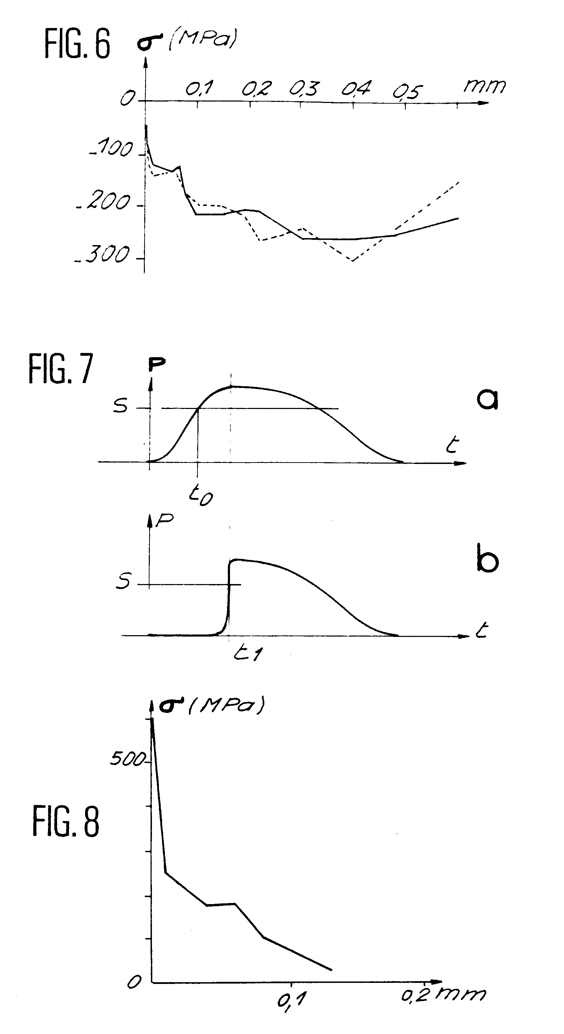

La figure 6 correspond à 3 tirs de 25 ns et 13 GW/cm$^2$ avec une peinture sur l'échantillon et 2 mm d'eau distillée. On notera la grande profondeur obtenue.

Les impulsions laser utilisées dans l'invention peuvent avoir la forme habituelle qu'on leur connaît, notamment en cas de fonctionnement en régime déclenché. La figure 7a en représente une, dans un diagramme puissance-temps. Le seuil S est atteint à l'instant to. De manière avantageuse, on peut réduire la durée du front de montée en utilisant un obturateur électrooptique (par exemple une cellule de Pockels). Cet obturateur est maintenu fermé tant que l'intensité maximale n'est pas atteinte et il est brusquement ouvert lorsque cette intensité est dépassée. On obtient alors une impulsion dont l'allure est représentée sur la partie b de la figure 7.

L'intérêt de cette disposition est le suivant. Pour que l'efficacité du choc soit maximum, le front de l'onde de choc doit avoir atteint son amplitude maximum avant l'interface absorbant-échantillon. C'est ce qui se produit si le front de montée de l'impulsion est très raide (temps de montée de l'ordre de la nanoseconde). En revanche, et comme déjà expliqué, l'allongement de la durée de l'impulsion favorise une action en profondeur. La forme particulière de l'impulsion représentée sur la figure 7b avec un front de montée raide (une nanoseconde environ) et une durée longue (10 à 20 ns) répond à ce double souci.

La figure 8 montre la pression (en ordonnées et en MPa), en fonction de la profondeur (en abscisses et en millimètres) induite par un tir de durée 30 ns à 10 GW/cm$^2$ dirigé sur la surface nue d'un échantillon (effet de trempe superficielle). Le matériau utilisé est le XC38 normalisé, c'est-à-dire très recuit. Ce traitement de surface, comme expliqué plus haut, vient renforcer le traitement en profondeur ultérieur obtenu à travers la couche absorbante et la lame transparente.

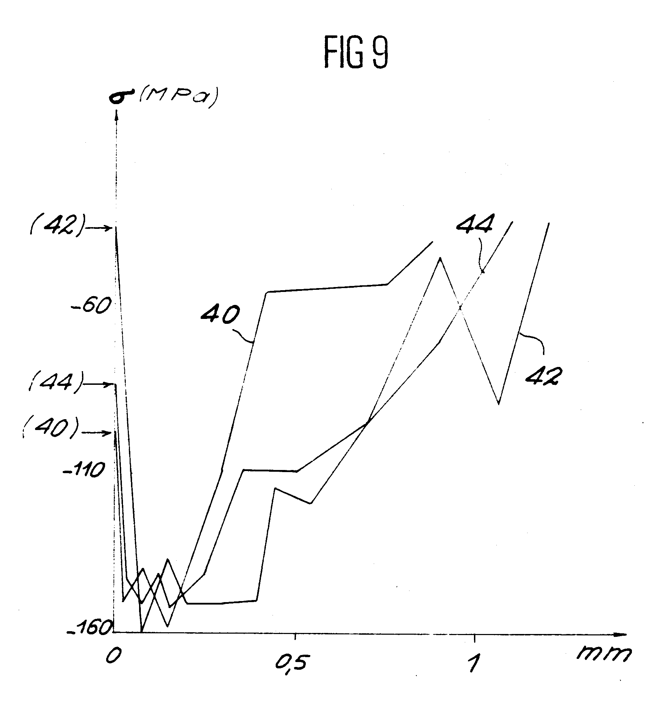

La figure 9, enfin, permet de comparer les effets obtenus avec des impulsions de 3 ns à 50 GW/cm$^2$ (courbe 40) de 30 ns à 9 GW/cm$^2$ (courbe 42) et avec des impulsions tronquées vers l'avant à 25 GW/cm$^2$ (courbe 44). En surface, les effets de l'impulsion tronquée se rapprochent des effets obtenus avec l'impulsion de 3 ns alors qu'en profondeur ils se rapprochent de ceux qui sont obtenus avec l'impulsion de 30 ns.

**Revendications**

1. Procédé de traitement d'un matériau par chocs laser, destiné notamment à améliorer la tenue en fatigue de ce matériau, procédé dans lequel on recouvre un échantillon dudit matériau par une première couche d'un premier matériau absorbant à la longueur d'onde du rayonnement laser utilisé, et on recouvre cette première couche par une seconde couche d'un second matériau et dans lequel on irradie l'ensemble par une impulsion de rayonnement laser, ce procédé étant caractérisé par le fait que, le second matériau admettant pour le rayonnement utilisé un seuil de flux lumineux en-dessous duquel il est transparent et au-dessus duquel il devient opaque, on irradie l'ensemble par au moins une impulsion laser ayant un flux qui est d'abord inférieur à ce seuil puis qui dépasse celui-ci.

2. Procédé selon la revendication 1, caractérisé par le fait que l'on irradie l'ensemble par plusieurs impulsions de rayonnement laser.

3. Procédé selon la revendication 2, caractérisé par le fait que les impulsions laser ont des durées différentes, les unes courtes de l'ordre de la nanoseconde, les autres plus longues, de l'ordre de la dizaine de nanosecondes.

4. Procédé selon la revendication 1, caractérisé par le fait que l'impulsion de rayonnement laser a un front de montée raide de l'ordre de la nanoseconde et une durée de l'ordre de la dizaine de nanosecondes.

5. Procédé selon la revendication 1, caractérisé par le fait que, préalablement audit traitement par chocs, on fait subir au matériau un traitement thermique consistant à irradier la surface nue de l'échantillon par un rayonnement laser.

6. Procédé selon la revendication 5, caractérisé par le fait que le rayonnement laser servant au traitement thermique est formé d'au moins une impulsion.

7. Procédé selon la revendication 6, caractérisé par le fait que l'impulsion laser servant au traitement thermique a une durée comprise entre 0,2 et 100 nanosecondes.

8. Procédé selon la revendication 5, caractérisé par le fait que le rayonnement laser servant au traitement thermique est continu.

9. Procédé selon la revendication 5, caratérisé par le fait que le traitement thermique de la surface nue de l'échantillon s'effectue en présence d'un fluide en contact avec la surface.

10. Procédé selon la revendication 9, caractérisé par le fait que le fluide en contact avec la surface est un gaz.

11. Procédé selon la revendication 9, caractérisé par le fait que le fluide en contact avec la surface est un liquide.

12. Procédé selon la revendication 11, caractérisé par le fait que le liquide en contact avec la surface est de l'azote liquide.

**Claims**

1. Method for treating a material to laser shock, intended especially to improve the fatigue behaviour of this material, in which method a specimen of the said material is covered by a first layer of a first material absorbing at the wavelength of the laser radiation used and this first layer is covered by a second layer of a second material and in which the assembly is irradiated by a pulse of laser radiation, this method being characterised in that the second material admitting for the radiation used a light-flux threshold below which it is transparent and above which it becomes opaque, the assembly is irradiated by at least one laser pulse having a flux which is at first lower than this threshold and then which exceeds the latter.

**2.** Method according to Claim 1, characterised in that the assembly is irradiated by several pulses of laser radiation.

**3.** Method according to Claim 2, characterised in that the laser pulses have different durations, the short ones of the order of a nanosecond, the longer ones of the order of ten nanoseconds.

**4.** Method according to Claim 1, characterised in that the pulse of laser radiation has a fast rise time of the order of a nanosecond and a duration of the order of ten nanoseconds.

**5.** Method according to Claim 1, characterised in that, prior to the said shock treatment, the material undergoes a thermal treatment consisting in irradiating the bare surface of the specimen with laser radiation.

**6.** Method according to Claim 5, characterised in that the laser radiation serving for the thermal treatment is formed from at least one pulse.

**7.** Method according to Claim 6, characterised in that the laser pulse serving for the thermal treatment has a duration lying between 0.2 and 100 nanoseconds.

**8.** Method according to Claim 5, characterised in that the laser radiation serving for the thermal treatment is continuous.

**9.** Method according to Claim 5, characterised in that the thermal treatment of the bare surface of the specimen is carried out in the presence of a fluid in contact with the surface.

**10.** Method according to Claim 9, characterised in that the fluid in contact with the surface is a gas.

**11.** Method according to Claim 9, characterised in that the fluid in contact with the surface is a liquid.

**12.** Method according to Claim 11, characterised in that the liquid in contact with the surface is liquid nitrogen.

**Patentansprüche**

**1.** Verfahren zur Behandlung eines Materials mit Laserschocks insbesondere zur Verbesserung der Ermüdungsbeständigkeit dieses Materials, Verfahren, in dem eine Probe aus dem genannten Material mit einer ersten Schicht eines ersten, bei der Wellenlänge der verwendeten Laserstrahlung absorbierenden Materials beschichtet wird und diese erste Schicht mit einer zweiten Schicht eines zweiten Materials beschichtet wird und in dem diese Gesamtheit mit einem Laserstrahlimpuls bestrahlt wird, Verfahren, dadurch gekennzeichnet, daß die Gesamtheit mit mindestens einem Laserimpuls bestrahlt wird, dessen Lichtstrom zunächst unter einem Schwellenwert liegt, unter dem das zweite Material für die verwendete Strahlung lichtdurchlässig ist und über dem es undurchlässig wird, und diesen danach überschreitet.

**2.** Verfahren nach Patentanspruch 1, dadurch gekennzeichnet, daß die Gesamtheit mit mehreren Laserstrahlimpulsen bestrahlt wird.

**3.** Verfahren nach Patentanspruch 2, dadurch gekennzeichnet, daß die Laserimpulse unterschiedlich lange andauern, die einen, kurzen in der Größenordnung einer Nanosekunde, die anderen, längeren in der Größenordnung von zehn Nanosekunden.

**4.** Verfahren nach Patentanspruch 1, dadurch gekennzeichnet, daß der Laserstrahlimpuls eine steil ansteigende Flanke in der Größenordnung einer Nanosekunde und eine Dauer in der Größenordnung von zehn Nanosekunden aufweist.

**5.** Verfahren nach Patentanspruch 1, dadurch gekennzeichnet, daß das Material vor der genannten Schockbehandlung einer Wärmebehandlung unterzogen wird, die darin besteht, daß die unbeschichtete Oberfläche der Probe mit Laserstrahlung behandelt wird.

**6.** Verfahren nach Patentanspruch 5, dadurch gekennzeichnet, daß die zur Wärmebehandlung dienende Laserstrahlung aus mindestens einem Impuls besteht.

**7.** Verfahren nach Patentanspruch 6, dadurch gekennzeichnet, daß der zur Wärmebehandlung dienende Laserimpuls eine Dauer zwischen 0,2 und 100 Nanosekunden aufweist.

**8.** Verfahren nach Patentanspruch 5, dadurch gekennzeichnet, daß die zur Wärmebehandlung dienende Laserstrahlung kontinuierlich ist.

**9.** Verfahren nach Patentanspruch 5, dadurch gekennzeichnet, daß die Wärmebehandlung der unbeschichteten Oberfläche der Probe in Anwesenheit eines mit der Oberfläche in Kontakt stehenden Fluids erfolgt.

10. Verfahren nach Patentanspruch 9, dadurch gekennzeichnet, daß das mit der Oberfläche in Kontakt stehende Fluid ein Gas ist.

11. Verfahren nach Patentanspruch 9, dadurch gekennzeichnet, daß das mit der Oberfläche in Kontakt stehende Fluid eine Flüssigkeit ist.

12. Verfahren nach Patentanspruch 11, dadurch gekennzeichnet, daß die mit der Oberfläche in Kontakt stehende Flüssigkeit flüssiger Stickstoff ist.

FIG. 1

FIG. 2

FIG. 3

FIG. 4

FIG. 5

FIG. 6

$\sigma$ (MPa)

FIG. 7

P

a

b

FIG. 8

$\sigma$ (MPa)

# FIG 9